# DEMANDE DE BREVET EUROPEEN

(11) **EP 1 097 838 A1**
(43) Date de publication de la demande: **09.05.2001**
(21) Numéro de dépôt: 00403058.1
(22) Date de dépôt: 03.11.2000
(51) Int. Cl.: B60P 1/44, G08C 17/02

(54) **Dispositif de commande automatique de dispositifs fonctionnels de véhicule de transport**

(30) Priorité: 03.11.1999 FR 9913706
(71) Demandeur: Compagnie Erhel Hydris, 21000 Dijon (FR)
(72) Inventeur: Lamort De Gail, Marc, 75016 Paris (FR)
(74) Mandataire: Dawidowicz, Armand

(57) **Abrégé**

L'invention concerne un dispositif de commande automatique pour dispositifs fonctionnels tels que hayon élévateur (4), porte relevante, etc., pour véhicule de transport (1), comprenant de préférence un interrupteur central installé dans la cabine (3) du véhicule (1), des moyens d'émission de signaux de commande, des moyens de réception des signaux de commande et de transmission desdits signaux vers le ou les dispositifs à actionner.

L'invention consiste en ce que les moyens d'émission et les moyens de réception des signaux de commande communiquent entre eux sans fil, les moyens de réception présentant au moins deux zones de réception (A, B) dont l'une (A) est de plus faible étendue que l'autre (B), la zone de réception (A) réduite étant établie lors de la mise sous tension des moyens de réception par l'interrupteur central et la zone de réception (B) élargie étant établie lors de la reconnaissance d'un code d'identification reçu depuis les moyens d'émission.

Application aux véhicules de transport.

## Description

La présente invention concerne un dispositif de commande automatique de dispositifs fonctionnels tels qu'un hayon élévateur, une porte relevante ou similaire, de véhicule de transport.

Dans le domaine des véhicules de transport munis d'un hayon élévateur, on connaît deux types de commande automatique pour la manipulation d'un hayon élévateur.

Ainsi, on peut prévoir dans la cabine du conducteur du véhicule un interrupteur pour mettre sous tension le dispositif de commande et déployer le hayon. Le hayon déployé et le dispositif de commande mis sous tension, on commande la montée et la descente de ce hayon à l'aide d'une commande à pied ménagée sur ledit hayon et actionnable par le conducteur. Cependant, en fonction des charges à transporter sur le hayon, l'utilisateur peut ne pas être dans une position confortable et donc en pleine sécurité pour tenir la charge et commander en même temps la montée ou la descente.

Un autre dispositif de commande connu est constitué par un boîtier de commande monté dans le véhicule à proximité de l'ouverture arrière. Ce boîtier est relié électriquement au véhicule par au moins un câble. En conséquence, la longueur du câble étant limitée, l'utilisateur peut se retrouver dans une situation peu confortable lors de la montée ou de la descente de la plate-forme de chargement du véhicule. Dans ce cas également, la sécurité de l'utilisateur peut ne pas être totale.

Pour les autres dispositifs fonctionnels tels qu'une porte relevante, on prévoit généralement un interrupteur extérieur au véhicule permettant l'ouverture et la fermeture. Cet emplacement de l'interrupteur, généralement sur le côté du véhicule, nécessite la présence de l'utilisateur, ce qui n'est pas toujours confortable ou d'une grande sécurité lorsque celui-ci se trouve du côté circulation d'une rue par exemple.

Afin de pallier ces inconvénients, la présente invention a pour but de proposer un dispositif de commande automatique de tels dispositifs fonctionnels offrant des conditions d'utilisation à la fois confortables pour l'utilisateur et totalement sûres du point de vue de la sécurité.

A cet effet, l'invention a pour objet un dispositif de commande automatique pour dispositifs fonctionnels tels que hayon élévateur, porte relevante, etc., pour véhicule de transport, comprenant de préférence un interrupteur central installé dans la cabine du véhicule, des moyens d'émission de signaux de commande, des moyens de réception des signaux de commande et de transmission desdits signaux vers le ou les dispositifs à actionner, caractérisé en ce que les moyens d'émission et les moyens de réception des signaux de commande communiquent entre eux sans fil, les moyens de réception présentant au moins deux zones de réception dont l'une est de plus faible étendue que l'autre, la zone de réception réduite étant établie lors de la mise sous tension des moyens de réception par l'interrupteur central et la zone de réception élargie étant établie lors de la reconnaissance d'un code d'identification reçu depuis les moyens d'émission.

Ainsi, de manière avantageuse, la communication entre les moyens d'émission des signaux de commande et les moyens de réception desdits signaux étant sans fil, il est possible à l'utilisateur de se positionner librement par rapport à l'ouverture du véhicule ou par rapport au hayon pour commander ce dernier. L'utilisateur ne court donc pas le risque de se trouver mal positionné lors de la manipulation du hayon par exemple.

Avantageusement, la zone de réception réduite des moyens de réception oblige l'utilisateur à se positionner à proximité des moyens de réception qui sont installés de manière stationnaire dans le véhicule, de préférence au voisinage de l'ouverture arrière du véhicule tandis que les moyens d'émission sont portables, par exemple sous forme d'un boîtier télécommande. On incite ainsi les utilisateurs à se positionner à proximité des dispositifs fonctionnels actionnables à distance ce qui garantit une manipulation correcte de ceux-ci et en présence de l'utilisateur.

Ainsi, lorsque les moyens de réception ont reconnu le code d'identification correct, le hayon, par exemple, peut être commandé par l'utilisateur qui envoie des signaux de commande à l'aide desdits moyens d'émission, la zone de réception élargie permettant alors à l'utilisateur de circuler autour du véhicule pour manipuler les charges mais étant également limitée au voisinage direct du véhicule de manière à éviter toute commande intempestive du hayon, par exemple, alors que celui-ci est hors de la vue de l'utilisateur.

Selon une forme de réalisation préférée de l'invention, les moyens de réception sont constitués par au moins un récepteur radiofréquence recevant des signaux depuis les moyens d'émission constitués par un émetteur radiofréquence de préférence portable.

De manière à pouvoir commander divers dispositifs fonctionnels, l'émetteur radiofréquence peut fonctionner à des fréquences différentes. Ainsi, par exemple, chacune de ces fréquences établit une communication avec un récepteur différent associé à un dispositif fonctionnel spécifique.

Ainsi, par exemple, à une fréquence, l'émetteur envoie des signaux de commande vers le récepteur associé au hayon et, à une fréquence différente, les signaux de commande sont reçus par un autre récepteur associé, par exemple, à la porte relevante. Un simple interrupteur de commutation sur l'émetteur permet de passer d'une fréquence à une autre.

En variante, les moyens de réception sont constitués d'un récepteur principal qui est également émetteur et renvoie vers des récepteurs secondaires associés à différents dispositifs fonctionnels les signaux de commande reçus depuis l'émetteur.

De préférence, chaque signal envoyé par l'émetteur est spécifique d'un dispositif fonctionnel et est reconnu par des moyens de traitement et d'analyse du récepteur comme devant être renvoyé vers le récepteur secondaire associé audit dispositif fonctionnel spécifique.

On décrira maintenant l'invention plus en détail en référence au dessin dans lequel :

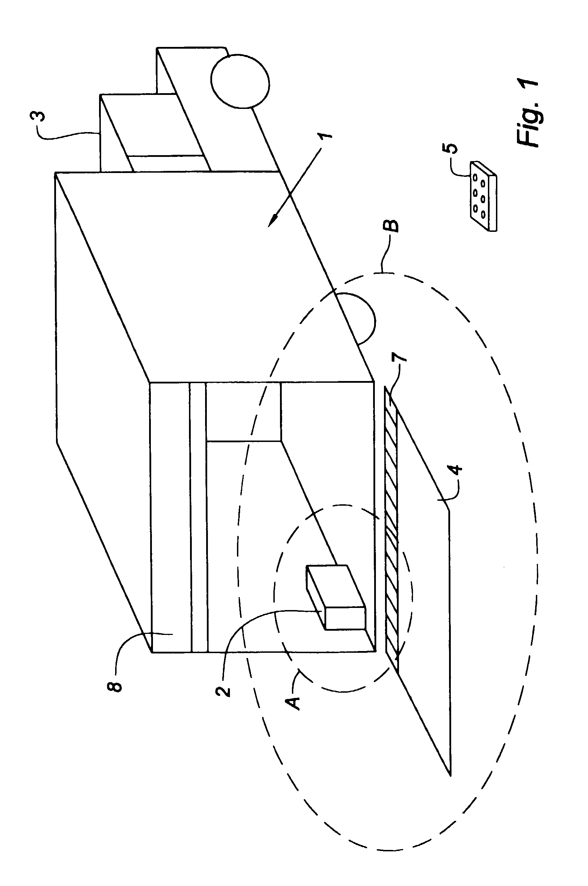

la figure 1 représente une vue en perspective arrière d'un véhicule équipé d'un dispositif selon l'invention ; et

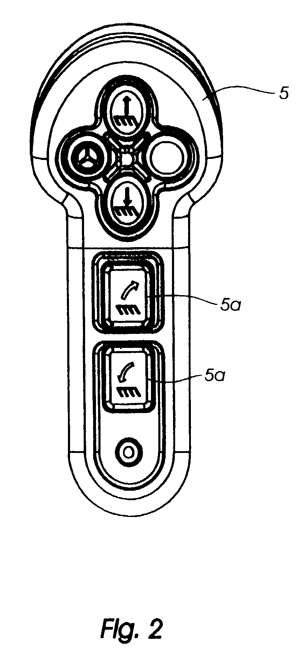

la figure 2 représente une vue en plan du dessus des moyens d'émission selon l'invention.

Dans un véhicule de transport 1, on installe un boîtier 2 renfermant un récepteur radiofréquence. Celui-ci est mis sous tension par commande depuis un interrupteur monté dans la cabine 3 du véhicule 1.

Lorsque le récepteur est mis sous tension, il établit une zone de réception A limitée à la proximité de l'ouverture du véhicule 1.

L'utilisateur qui veut actionner le hayon élévateur 4, possède un émetteur radiofréquence enfermé dans un boîtier 5. Cet émetteur envoie d'abord vers le récepteur un code d'identification qui, reconnu par le récepteur, permet d'établir une nouvelle zone de réception B plus large que la zone de réception A.

Cette zone de réception B permet à l'utilisateur d'actionner ensuite le hayon 4 en montée, en descente, en déploiement ou en repliement.

Le boîtier 5 présente une façade pourvue de boutons 6 d'actionnement correspondant à la descente, à la montée et au basculement du hayon 4.

Par commutation de la fréquence d'émission, l'émetteur 5 peut commander la porte relevante 8 du véhicule 1.

De manière à assurer une sécurité complète, le dispositif de commande selon l'invention comporte en outre des moyens de détection 7 de la présence d'une personne sur la zone du hayon 4 correspondant au bord de liaison avec le véhicule, lesdits moyens de détection 7 interdisant l'actionnement en montée du hayon élévateur 4 lorsqu'une présence est détectée sur ladite zone. Ces moyens de détection peuvent être constitués d'un capteur de pression sous forme d'un volet 7 monté le long du bord de liaison du hayon 4.

## Revendications

1. Dispositif de commande automatique pour dispositifs fonctionnels tels que hayon élévateur (4), porte relevante, etc., pour véhicule de transport (1), comprenant de préférence un interrupteur central installé dans la cabine (3) du véhicule (1), des moyens d'émission de signaux de commande, des moyens de réception des signaux de commande et de transmission desdits signaux vers le ou les dispositifs à actionner,
caractérisé en ce que les moyens d'émission et les moyens de réception des signaux de commande communiquent entre eux sans fil, les moyens de réception présentant au moins deux zones de réception (A, B) dont l'une (A) est de plus faible étendue que l'autre (B), la zone de réception (A) réduite étant établie lors de la mise sous tension des moyens de réception par l'interrupteur central et la zone de réception (B) élargie étant établie lors de la reconnaissance d'un code d'identification reçu depuis les moyens d'émission.

2. Dispositif selon la revendication 1,
caractérisé en ce que les moyens de réception sont installés de manière stationnaire dans le véhicule, de préférence au voisinage de l'ouverture arrière du véhicule, et les moyens d'émission sont de préférence portables.

3. Dispositif selon l'une des revendications 1 et 2, caractérisé en ce que les moyens de réception sont constitués par au moins un récepteur radiofréquence et les moyens d'émission sont constitués par un émetteur radiofréquence.

4. Dispositif selon la revendication 3,
caractérisé en ce que l'émetteur radiofréquence fonctionne à des fréquences différentes.

5. Dispositif selon la revendication 4,
caractérisé en ce que chacune des fréquences de l'émetteur radiofréquence établit une communication avec un récepteur différent associé à un dispositif fonctionnel spécifique.

6. Dispositif selon l'une des revendications 1 à 4, caractérisé en ce que les moyens de réception sont constitués d'un récepteur principal qui est également émetteur et renvoie, vers des récepteurs secondaires associés à différents dispositifs fonctionnels, les signaux de commande reçus depuis l'émetteur.

7. Dispositif selon la revendication 6,
caractérisé en ce que chaque signal est spécifique d'un dispositif fonctionnel et est reconnu par des moyens de traitement et d'analyse du récepteur comme devant être renvoyé vers le récepteur secondaire associé audit dispositif fonctionnel spécifique.

8. Dispositif selon l'une des revendications 1 à 7, caractérisé en ce que les moyens d'émission sont enfermés dans un boîtier (5) présentant des boutons d'actionnement (6).

9. Dispositif selon l'une des revendications 1 à 8, caractérisé en ce qu'il comporte des moyens de détection (7) de la présence d'une personne sur la zone du hayon (4) correspondant au bord de liaison avec le véhicule, lesdits moyens de détection (7) interdisant l'actionnement en montée du hayon élévateur (4) lorsqu'une présence est détectée sur ladite zone.

10. Dispositif selon la revendication 9,
caractérisé en ce que les moyens de détection sont constitués par un capteur de pression sous forme d'un volet (7) monté le long du bord de liaison du hayon (4).
